# EUROPEAN PATENT SPECIFICATION

(11) **EP 1 017 726 B1**
(45) Date of publication and mention of the grant of the patent: **16.04.2003**
(21) Application number: 98948209.6
(22) Date of filing: 15.09.1998
(51) Int. Cl.: C08B 11/20, C08B 15/00, C11D 3/22

(54) **LAUNDRY DETERGENT COMPOSITIONS WITH CELLULOSIC BASED POLYMERS TO PROVIDE APPEARANCE AND INTEGRITY BENEFITS TO FABRICS LAUNDERED THEREWITH**
WASCHMITTELZUSAMMENSETZUNGEN MIT POLYMEREN AUS ZELLULOSE, DIE AUSSEHEN-UND INTEGRITÄTSEIGENSCHAFTEN DEN DAMIT GEWASCHENEN STOFFEN VERLEIHEN
COMPOSITIONS DE DETERGENT POUR LESSIVE COMPORTANT DES POLYMERES CELLULOSIQUES QUI CONFERENT UN ASPECT ET UNE INTEGRITE AVANTAGEUX AUX TISSUS LAVES A L'AIDE DE CELLES-CI

(30) Priority: 15.09.1997 US 58892 P
(43) Date of publication of application: 12.07.2000
(73) Proprietor: THE PROCTER & GAMBLE COMPANY, Cincinnati, Ohio 45202 (US)
(72) Inventor: LEUPIN, Jennifer, Ann, Cincinnati, OH 45249 (US); BOYER, Stanton, Lane, Fairfield, OH 45014 (US); GOSSELINK, Eugene, Paul, Cincinnati, OH 45251 (US); WANG, Jiping, West Chester, OH 45069 (US); HUNTER, Kathleen, Brenner, Villa Hills, KY 41017 (US); WASHINGTON, Nodie, Wilberforce, OH 45384 (US)
(74) Representative: Peet, Jillian Wendy
(86) International application number: PCT/US98/19139
(87) International publication number: WO 99/014245

(56) References cited:
- EP-A- 0 615 979
- EP-A- 0 634 481
- WO-A-94/24169
- WO-A-98/29528
- GB-A- 2 219 587
- US-A- 4 963 664

## Description

The present invention relates to compositions, in either liquid or granular form, for use in laundry applications, wherein the compositions comprise certain cellulosic based polymer or oligomer materials which impart appearance and integrity benefits to fabrics and textiles laundered in washing solutions formed from such compositions.

It is, of course, well known that alternating cycles of using and laundering fabrics and textiles, such as articles of worn clothing and apparel, will inevitably adversely affect the appearance and integrity of the fabric and textile items so used and laundered. Fabrics and textiles simply wear out over time and with use. Laundering of fabrics and textiles is necessary to remove soils and stains which accumulate therein and thereon during ordinary use. However, the laundering operation itself, over many cycles, can accentuate and contribute to the deterioration of the integrity and the appearance of such fabrics and textiles.

Deterioration of fabric integrity and appearance can manifest itself in several ways. Short fibers are dislodged from woven and knit fabric/textile structures by the mechanical action of laundering. These dislodged fibers may form lint, fuzz or "pills" which are visible on the surface of fabrics and diminish the appearance of newness of the fabric. Further, repeated laundering of fabrics and textiles, especially with bleach-containing laundry products, can remove dye from fabrics and textiles and impart a faded, worn out appearance as a result of diminished color intensity, and in many cases, as a result of changes in hues or shades of color.

Given the foregoing, there is clearly an ongoing need to identify materials which could be added to laundry detergent products that would associate themselves with the fibers of the fabrics and textiles laundered using such detergent products and thereby reduce or minimize the tendency of the laundered fabric/textiles to deteriorate in appearance. Any such detergent product additive material should, of course, be able to benefit fabric appearance and integrity without unduly interfering with the ability of the laundry detergent to perform its fabric cleaning function. The present invention is directed to the use of cellulosic based polymer or oligomer materials in laundry applications which perform in this desired manner.

Cellulosic based polymer or oligomer materials which are suitable for use in laundry operations and provide the desired fabric appearance and integrity benefits can be characterized by the following gencral formula: 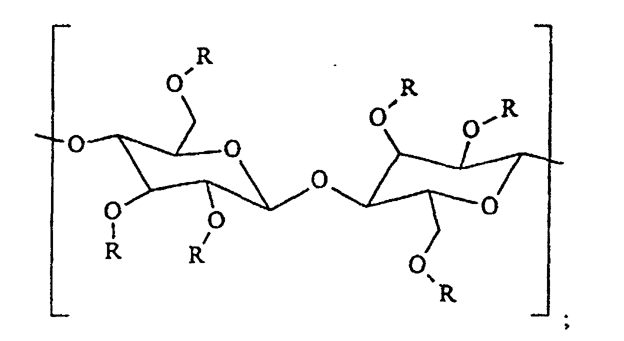 wherein each R is independently selected from the group consisting of 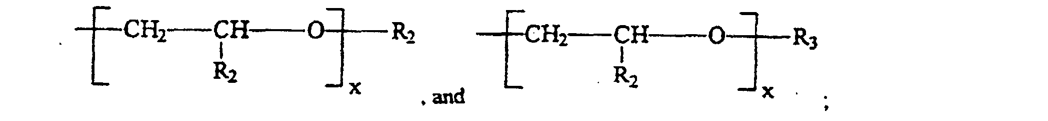 wherein:
- each R₂ is independently selected from the group consisting of H and C₁-C₄ alkyl;
- each R₃ is independently selected from the group consisting of 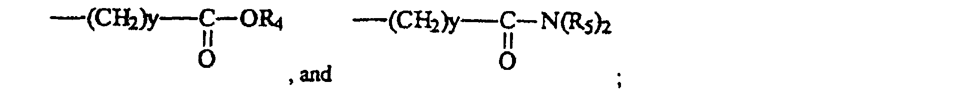
wherein:
- each R₄ is independently selected from the group consisting H, C₁-C₂₀ alkyl, C₅-C₇ cycloalkyl, C₇-C₂₀ alkylaryl, C₇-C₂₀ arylalkyl, substituted alkyl, aminoalkyl, alkylaminoalkyl, dialkylanunoalkyl, piperidinoalkyl, morpholinoalkyl, cycloalkylaminoalkyl, hydroxyalkyl, Na, K, 1/2Ca, and 1/2Mg;
- each R₅ is independently selected from the group consisting H, C₁-C₂₀ alkyl, C₅-C₇ cycloalkyl, C₇-C₂₀ alkylaryl, C₇-C₂₀ arylalkyl, substituted alkyl, aminoalkyl, alkylaminoalkyl, dialkylaminoalkyl, piperidinoalkyl, morpholinoalkyl, cycloalkylaminoalkyl and hydroxyalkyl
wherein:
each x is from 0 to 5;
each y is from 1 to 5;
provided that:
if R₄ bears a positive charge, it is balanced by a suitable anion; and
the Degree of Substitution for group R₃ is between 0.2 and 2.0, more preferably between 0.3 and 1.0, and most preferably between 0.4 and 0.7.

In another embodiment of the present invention a process is defined wherein cellulose derivatives are obtained by conversion of a carboxylalkylated cellulose at least partially to an ester, followed by treatment with an amine in the presence of at least traces of water. Alternatively, the cellulose derivatives obtained by conversion of a carboxylalkylated cellulose at least partially to an ester, followed by treatment with enough base in the presence of water to hydrolyze at least 10% of the ester groups.

The cellulosic based polymer or oligomer materials defined above can be used as a washing solution additive in either granular or liquid form. Alternatively, they can be admixed to granular detergents, dissolved in liquid detergent compositions or added to a fabric softening composition. The foregoing description of uses for the cellulosic based fabric treatment materials defined herein are intended to be exemplary and other uses will be apparent to those skilled in the art and are intended to be within the scope of the present invention.

The laundry detergent compositions herein comprise from 1% to 80% by weight of a detersive surfactant, from 0.1% to 80% by weight of an organic or inorganic detergency builder and from 0.1% to 5% by weight of the cellulosic based fabric treatment materials of the present invention. The detersive surfactant and detergency builder materials can be any of those useful in conventional laundry detergent products.

Aqueous solutions of the cellulosic based polymer or oligomer materials of the subject invention comprise from 0.1% to 80% by weight of the cellulosic based fabric treatment materials dissolved in water and other ingredients such as stabilizers and pH adjusters.

In its method aspect, the present invention relates to the laundering or treating'of fabrics and textiles in aqueous washing or treating solutions formed from effective amounts of the detergent compositions described herein, or formed from the individual components of such compositions. Laundering of fabrics and textiles in such washing solutions, followed by rinsing and drying, imparts fabric appearance benefits to the fabric and textile articles so treated. Such benefits can include improved overall appearance, pill/fuzz reduction, antifading, improved abrasion resistance, and/or enhanced softness.

As noted, when fabric or textiles are laundered in wash solutions which comprise the cellulosic based polymer or oligomer materials of the present invention fabric appearance and integrity are enhanced. The cellulosic based fabric treatment materials can be added to wash solutions by incorporating them into a detergent composition, a fabric softener or by adding them separately to the washing solution. The cellulosic based fabric treatment materials are described herein primarily as liquid or granular detergent additives but the present invention is not meant to be so limited. The cellulosic based fabric treatment materials, detergent composition components, optional ingredients for such compositions and methods of using such compositions, are described in detail below. All percentages are by weight unless other specified.

### A) Cellulosic Based Polymer or Oligomer Materials

The essential component of the compositions of the present invention comprises one or more cellulosic based polymer or oligomer. Such materials have been found to impart a number of appearance benefits to fabrics and textiles laundered in aqueous washing solutions formed from detergent compositions which contain such cellulosic based fabric treatment materials. Such fabric appearance benefits can include, for example, improved overall appearance of the laundered fabrics, reduction of the formation of pills and fuzz, protection against color fading or improved abrasion resistance. The cellulosic based fabric treatment materials used in the compositions and methods herein can provide such fabric appearance benefits with acceptably little or no loss in cleaning performance provided by the laundry detergent compositions into which such materials are incorporated.

As will be apparent to those skilled in the art, an oligomer is a molecule consisting of only a few monomer units while polymers comprise considerably more monomer units. For the present invention, oligomers are defined as molecules having an average molecular weight below 1,000 and polymers are molecules having an average molecular weight of greater than 1,000. One suitable type of cellulosic based polymer or oligomer fabric treatment material for use herein has an average molecular weight of from 10,000 to 2,000,000, preferably from 50,000 to 1,000,000.

The cellulosic based fabric treatment component of the detergent compositions herein will generally comprise from 0.1% to 5% by the weight of the detergent composition. More preferably, such cellulosic based fabric treatment materials will comprise from 0.5% to 4% by weight of the detergent compositions, most preferably from 0.75% to 3%. However, as discussed above, when used as a washing solution additive, i.e. when the cellulosic based fabric treatment component is not incorporated into a detergent composition, the concentration of the cellulosic based component can comprise from 0.1% to 80% by weight of the additive material.

One suitable group of cellulosic based polymer or oligomer materials for use herein is characterized by the following formula: 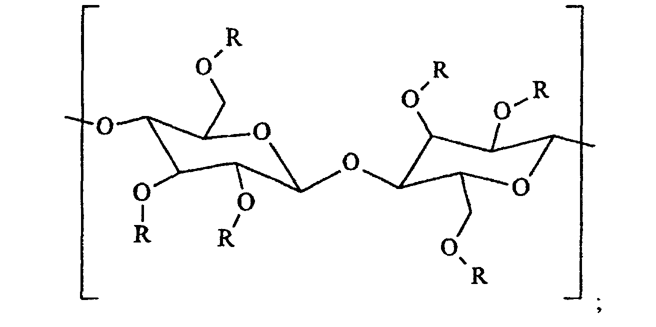 wherein each R is independently selected from the group consisting of R_{C}, R_{H}, and 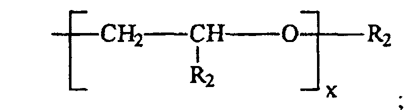 wherein:
- each R₂ is independently selected from the group consisting of H and C₁-C₄ alkyl;
- each R_{C} is 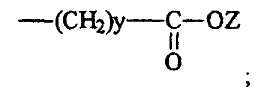
- each R_{H} is 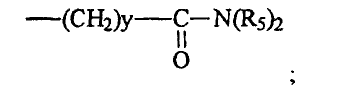
wherein:
- each Z is independently selected from the group consisting H, C₁-C₂₀ alkyl, C₅-C₇ cycloalkyl, C₇-C₂₀ alkylaryl, C₇-C₂₀ arylalkyl, substituted alkyl, aminoalkyl, alkylaminoalkyl, dialkylaminoalkyl, piperidinoalkyl, morpholinoalkyl, cycloalkylaminoalkyl, hydroxyalkyl, and M;
- each R₅ is independently selected from the group consisting H, C₁-C₂₀ alkyl, C₅-C₇ cycloalkyl, C₇-C₂₀ alkylaryl, C₇-C₂₀ arylalkyl, substituted alkyl, aminoalkyl, alkylaminoalkyl, dialkylaminoalkyl, piperidinoalkyl, morpholinoalkyl, cycloalkylaminoalkyl and hydroxyalkyl
wherein:
M is selected from the group consisting of Na, K, 1/2Ca, and 1/2Mg;
each x is from 0 to 5;
each y is from 1 to 5;
provided that:
- if Z bears a positive charge, it is balanced by a suitable anion; and
- the Degree of Substitution for group R_{H} is between 0.001 and 0.3, more preferably between 0.005 and 0.2, and most preferably between 0.01 and 0.1; and
- the Degree of Substitution for group R_{C} wherein Z is H or M is between 0.2 and 2.0, more preferably between 0.3 and 1.0, and most preferably between 0.4 and 0.7.

The "Degree of Substitution" for group R_{H}, which is sometimes abbreviated herein "DS_{RH}", means the number of moles of group R_{H} components that are substituted per anhydrous glucose unit, wherein an anhydrous glucose unit is a six membered ring as shown in the repeating unit of the general structure above.

The "Degree of Substitution" for group R_{C}, which is sometimes abbreviated herein "DS_{RC}", means the number of moles of group R_{C} components, wherein Z is H or M, that are substituted per anhydrous glucose unit, wherein an anhydrous glucose unit is a six membered ring as shown in the repeating unit of the general structure above. The requirement that Z be H or M is necessary to insure that there are a sufficient number of carboxy methyl groups such that the resulting polymer is soluble. It is understood that in addition to the required number of R_{C} components wherein Z is H or M, there can be, and most preferably are, additional R_{C} components wherein Z is a group other than H or M.

In an especially preferred embodiment of this invention at least 0.1 of the R₃ groups are derived from -CH₂-COOH or a salt thereof, that is the degree of substitution in the cellulose chain is at least 0.1 for -CH₂-COOH and salts thereof. In another embodiment of the present invention all of the x's are equal to 0.

The subject cellulosic based polymer or oligomer materials can be produced by conversion of a carboxylalkylated cellulosic at least partially to an ester, followed by treatment with an amine in the presence of at least traces of water. Alternatively, the cellulose derivatives obtained by conversion of a carboxylalkylated cellulosic at least partially to an ester, followed by treatment with enough base in the presence of water to hydrolyze at least 10% of the ester groups. The production of materials according to the present invention is further defined in the Examples below.

### B) Detersive Surfactant

The detergent compositions herein comprise from 1% to 80% by weight of a detersive surfactant. Preferably such compositions comprise from 5% to 50% by weight of surfactant. Detersive surfactants utilized can be of the anionic, nonionic, zwitterionic, ampholytic or cationic type or can comprise compatible mixtures of these types. Detergent surfactants useful herein are described in U.S. Patent 3,664,961, Norris, issued May 23, 1972, U.S. Patent 3,919,678, Laughlin et al., issued December 30, 1975, U.S. Patent 4,222,905, Cockrell, issued September 16, 1980, and in U.S. Patent 4,239,659, Murphy, issued December 16, 1980. Of all the surfactants, anionics and nonionics are preferred.

Useful anionic surfactants can themselves be of several different types. For example, watersoluble salts of the higher fatty acids, i.e., "soaps", are useful anionic surfactants in the compositions herein. This includes alkali metal soaps such as the sodium, potassium, ammonium, and alkylolammonium salts of higher fatty acids containing from 8 to 24 carbon atoms, and preferably from 12 to 18 carbon atoms. Soaps can be made by direct saponification of fats and oils or by the neutralization of free fatty acids. Particularly useful are the sodium and potassium salts of the mixtures of fatty acids derived from coconut oil and tallow, i.e., sodium or potassium tallow and coconut soap.

Additional non-soap anionic surfactants which are suitable for use herein include the watersoluble salts, preferably the alkali metal, and ammonium salts, of organic sulfuric reaction products having in their molecular structure an alkyl group containing from 10 to 20 carbon atoms and a sulfonic acid or sulfuric acid ester group. (Included in the term "alkyl" is the alkyl portion of acyl groups.) Examples of this group of synthetic surfactants are a) the sodium, potassium and ammonium alkyl sulfates, especially those obtained by sulfating the higher alcohols (C₈-C₁₈ carbon atoms) such as those produced by reducing the glycerides of tallow or coconut oil; b) the sodium, potassium and ammonium alkyl polyethoxylate sulfates, particularly those in which the alkyl group contains from 10 to 22, preferably from 12 to 18 carbon atoms, and wherein the polyethoxylate chain contains from 1 to 15, preferably 1 to 6 ethoxylate moieties; and c) the sodium and potassium alkylbenzene sulfonates in which the alkyl group contains from 9 to 15 carbon atoms, in straight chain or branched chain configuration, e.g., those of the type described in U.S. Patents 2,220,099 and 2,477,383. Especially valuable are linear straight chain alkylbenzene sulfonates in which the average number of carbon atoms in the alkyl group is from 11 to 13, abbreviated as C₁₁₋₁₃ LAS.

Preferred nonionic surfactants are those of the formula R₁(OC₂H₄)ₙOH, wherein R₁ is a C₁₀-C₁₆ alkyl group or a C₈-C₁₂ alkyl phenyl group, and n is from 3 to 80. Particularly preferred are condensation products of C₁₂-C₁₅ alcohols with from 5 to 20 moles of ethylene oxide per mole of alcohol, e.g., C₁₂-C₁₃ alcohol condensed with about 6.5 moles of ethylene oxide per mole of alcohol.

Additional suitable nonionic surfactants include polyhydroxy fatty acid amides of the formula: 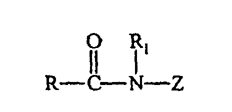 wherein R is a C₉₋₁₇ alkyl or alkenyl, R₁ is a methyl group and Z is glycityl derived from a reduced sugar or alkoxylated derivative thereof. Examples are N-methyl N-1-deoxyglucityl cocoamide and N-methyl N-1-deoxyglucityl oleamide. Processes for making polyhydroxy fatty acid amides are known and can be found in Wilson, U.S. Patent 2,965,576 and Schwartz, U.S. Patent 2,703,798.

Preferred surfactants for use in the detergent compositions described herein are amine based surfactants of the general formula: 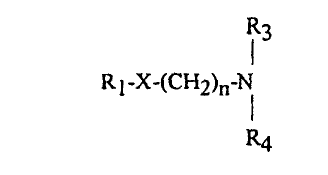 wherein R₁ is a C₆-C ₁₂ alkyl group; n is from 2 to 4, X is a bridging group which is selected from NH, CONH, COO, or O or X can be absent; and R₃ and R₄ are individually selected from H, C₁-C₄ alkyl, or (CH₂-CH₂-OCR₅)) wherein R₅ is H or methyl. Especially preferred amines based surfactants include the following:

R₁-(CH₂)₂-NH₂

R₁-O-(CH₂)₃-NH₂

R₁-C(O)-NH-(CH₂)₃-N(CH₃)₂

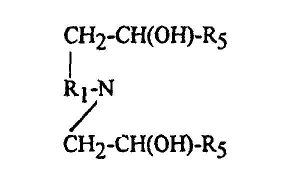

wherein R₁ is a C₆-C₁₂ alkyl group and R₅ is H or CH₃. Particularly preferred amines for use in the surfactants defined above include those selected from the group consisting of octyl amine, hexyl amine, decyl amine, dodecyl amine, C₈-C₁₂ bis(hydroxyethyl)amine, C₈-C₁₂ bis(hydroxyisopropyl)amine, C₈-C₁₂ amido-propyl dimethyl amine, or mixtures thereof.

In a highly preferred embodiment, the amine based surfactant is described by the formula:

R₁-C(O)-NH-(CH₂)₃-N(CH₃)₂

wherein R₁ is C₈-C₁₂ alkyl.

### C) Detergent Builder

The detergent compositions herein may also comprise from 0.1% to 80% by weight of a detergent builder. Preferably such compositions in liquid form will comprise from 1% to 10% by weight of the builder component. Preferably such compositions in granular form will comprise from 1% to 50% by weight of the builder component. Detergent builders are well known in the art and can comprise, for example, phosphate salts as well as various organic and inorganic nonphosphorus builders.

Water-soluble, nonphosphorus organic builders useful herein include the various alkali metal, ammonium and substituted ammonium polyacetates, carboxylates, polycarboxylates and polyhydroxy sulfonates. Examples of polyacetate and polycarboxylate builders are the sodium, potassium, lithium, ammonium and substituted ammonium salts of ethylene diamine tetraacetic acid, nitrilotriacetic acid, oxydisuccinic acid, mellitic acid, benzene polycarboxylic acids, and citric acid. Other suitable polycarboxylates for use herein are the polyacetal carboxylates described in U.S. Patent 4,144,226, issued March 13, 1979 to Crutchfield et al., and U.S. Patent 4,246,495, issued March 27, 1979 to Crutchfield et al.. Particularly preferred polycarboxylate builders are the oxydisuccinates and the ether carboxylate builder compositions comprising a combination of tartrate monosuccinate and tartrate disuccinate described in U.S. Patent 4,663,071, Bush et al., issued May 5, 1987.

Examples of suitable nonphosphorus, inorganic builders include the silicates, aluminosilicates, borates and carbonates. Particularly preferred are sodium and potassium carbonate, bicarbonate, sesquicarbonate, tetraborate decahydrate, and silicates having a weight ratio of SiO₂ to alkali metal oxide of from 0.5 to 4.0, preferably from 1.0 to 2.4. Also preferred are aluminosilicates including zeolites. Such materials and their use as detergent builders are more fully discussed in Corkill et al., U. S. Patent No. 4,605,509. Also discussed in U. S. Patent No. 4,605,509 are crystalline layered silicates which are suitable for use in the detergent compositions of this invention.

### D) Optional Detergent Ingredients

In addition to the surfactants, builders and cellulosic based polymer or oligomer materials hereinbefore described, the detergent compositions of the present invention can also include any number of additional optional ingredients. These include conventional detergent composition components such as enzymes and enzyme stabilizing agents, suds boosters or suds suppressers, anti-tarnish and anticorrosion agents, soil suspending agents, soil release agents, germicides, pH adjusting agents, non-builder alkalinity sources, chelating agents, organic and inorganic fillers, solvents, hydrotropes, optical brighteners, dyes and perfumes.

pH adjusting agents may be necessary in certain applications where the pH of the wash solution is greater than 10.0 because the fabric integrity benefits of the defined compositions begin to diminish at a higher pH. Hence, if the wash solution is greater than 10.0 after the addition of the cellulosic based polymer or oligomer materials of the present invention a pH adjuster should be used to reduce the pH of the washing solution to below 10.0, preferably to a pH of below 9.5 and most preferably below 7.5. Suitable pH adjusters will be known to those skilled in the art.

A preferred optional ingredients for incorporation into the detergent compositions herein comprises a bleaching agent, e.g., a peroxygen bleach. Such peroxygen bleaching agents may be organic or inorganic in nature. Inorganic peroxygen bleaching agents are frequently utilized in combination with a bleach activator.

Useful organic peroxygen bleaching agents include percarboxylic acid bleaching agents and salts thereof. Suitable examples of this class of agents include magnesium monoperoxyphthalate hexahydrate, the magnesium salt of metachloro perbenzoic acid, 4-nonylamino-4-oxoperoxybutyric acid and diperoxydodecanedioic acid. Such bleaching agents are disclosed in U.S. Patent 4,483,781, Hartman, Issued November 20, 1984; European Patent Application EP-A-133,354, Banks et al., Published February 20, 1985; and U.S. Patent 4,412,934, Chung et al., Issued November 1, 1983. Highly preferred bleaching agents also include 6-nonylamino-6-oxoperoxycaproic acid (NAPAA) as described in U.S. Patent 4,634,551, Issued January 6, 1987 to Burns et al.

Inorganic peroxygen bleaching agents may also be used, generally in particulate form, in the detergent compositions herein. Inorganic bleaching agents are in fact preferred. Such inorganic peroxygen compounds include alkali metal perborate and percarbonate materials. For example, sodium perborate (e.g. mono- or tetra-hydrate) can be used. Suitable inorganic bleaching agents can also include sodium or potassium carbonate peroxyhydrate and equivalent "percarbonate" bleaches, sodium pyrophosphate peroxyhydrate, urea peroxyhydrate, and sodium peroxide. Persulfate bleach (e.g., OXONE®, manufactured commercially by DuPont) can also be used. Frequently inorganic peroxygen bleaches will be coated with silicate, borate, sulfate or watersoluble surfactants. For example, coated percarbonate particles are available from various commercial sources such as FMC, Solvay Interox, Tokai Denka and Degussa.

Inorganic peroxygen bleaching agents, e.g., the perborates or the percarbonates, are preferably combined with bleach activators, which lead to the *in situ* production in aqueous solution (i.e., during use of the compositions herein for fabric laundering/bleaching) of the peroxy acid corresponding to the bleach activator. Various non-limiting examples of activators are disclosed in U.S. Patent 4,915,854, Issued April 10, 1990 to Mao et al.; and U.S. Patent 4,412,934 Issued November 1, 1983 to Chung et al. The nonanoyloxybenzene sulfonate (NOBS) and tetraacetyl ethylene diamine (TAED) activators are typical and preferred. Mixtures thereof can also be used. See also the hereinbefore referenced U.S. 4,634,551 for other typical bleaches and activators useful herein.

Other useful amido-derived bleach activators are those of the formulae:

R¹N(R⁵)C(O)R²C(O)L or R¹C(O)N(R⁵)R²C(O)L

wherein R¹ is an alkyl group containing from 6 to 12 carbon atoms, R² is an alkylene containing from 1 to 6 carbon atoms, R⁵ is H or alkyl, aryl, or alkaryl containing from 1 to 10 carbon atoms, and L is any suitable leaving group. A leaving group is any group that is displaced from the bleach activator as a conscquence of the nucleophilic attack on the bleach activator by the perhydrolysis anion. A preferred leaving group is phenol sulfonate.

Preferred examples of bleach activators of the above formulae include (6-octanamidocaproyl)oxybenzenesulfonate, (6-nonanamidocaproyl) oxybenzenesulfonate, (6-decanamidocaproyl)oxybenzenesulfonate and mixtures thereof as described in the hereinbefore referenced U.S. Patent 4,634,551.

Another class of useful bleach activators comprises the benzoxazin-type activators disclosed by Hodge et al. in U.S. Patent 4,966, 723, Issued October 30, 1990. A highly preferred activator of the benzoxazin-type is:

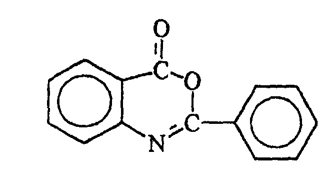

Still another class of useful bleach activators includes the acyl lactam activators, especially acyl caprolactams and acyl valerolactams of the formulae: 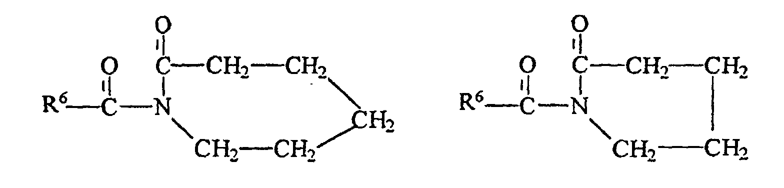 wherein R⁶ is H or an alkyl, aryl, alkoxyaryl, or alkaryl group containing from 1 to 12 carbon atoms. Highly preferred lactam activators include benzoyl caprolactam, octanoyl caprolactam, 3,5,5-trimethylhexanoyl caprolactam, nonanoyl caprolactam, decanoyl caprolactam, undecenoyl caprolactam, benzoyl valerolactam, octanoyl valerolactam, nonanoyl valerolactam, decanoyl valerolactam, undecenoyl valerolactam, 3,5,5-trimethylhexanoyl valerolactam and mixtures thereof. See also U.S. Patent 4,545,784, Issued to Sanderson, October 8, 1985, which discloses acyl caprolactams, including benzoyl caprolactam, adsorbed into sodium perborate.

If utilized, peroxygen bleaching agent will generally comprise from 2% to 30% by weight of the detergent compositions herein. More preferably, peroxygen bleaching agent will comprise from 2% to 20% by weight of the compositions. Most preferably, peroxygen bleaching agent will be present to the extent of from 3% to 15% by weight of the compositions herein. If utilized, bleach activators can comprise from 2% to 10% by weight of the detergent compositions herein. Frequently, activators are employed such that the molar ratio of bleaching agent to activator ranges from 1:1 to 10:1, more preferably from 1.5:1 to 5:1.

Another highly preferred optional ingredient in the detergent compositions herein is a detersive enzyme component. While it is known that some enzymes will degrade the peptide bonds of cellulosics, the cellulosic based polymer or oligomer materials defined herein do not exhibit such degradation in the presence of enzymes. Hence, enzymes can be added to detergent compositions which comprise the cellulosic based fabric treatment materials of the present invention with substantially no degradation.

Enzymes can be included in the present detergent compositions for a variety of purposes, including removal of protein-based, carbohydrate-based, or triglyceride-based stains from substrates, for the prevention of refugee dye transfer in fabric laundering, and for fabric restoration. Suitable enzymes include proteases, amylases, lipases, cellulases, peroxidases, and mixtures thereof of any suitable origin, such as vegetable, animal, bacterial, fungal and yeast origin. Preferred selections are influenced by factors such as pH-activity and/or stability, optimal thermostability, and stability to active detergents or builders. In this respect bacterial or fungal enzymes are preferred, such as bacterial amylases and proteases, and fungal cellulases.

"Detersive enzyme", as used herein, means any enzyme having a cleaning, stain removing or otherwise beneficial effect in a laundry detergent composition. Preferred enzymes for laundry purposes include, but are not limited to, proteases, cellulases, lipases, amylases and peroxidases.

Enzymes are normally incorporated into detergent compositions at levels sufficient to provide a "cleaning-effective amount". The term "cleaning-effective amount" refers to any amount capable of producing a cleaning, stain removal, soil removal, whitening, deodorizing, or freshness improving effect on substrates such as fabrics. In practical terms for current commercial preparations, typical amounts are up to 5 mg by weight, more typically 0.01 mg to 3 mg, of active enzyme per gram of the detergent composition. Stated otherwise, the compositions herein will typically comprise from 0.001% to 5%, preferably 0.01%-1% by weight of a commercial enzyme preparation. Protease enzymes are usually present in such commercial preparations at levels sufficient to provide from 0.005 to 0.1 Anson units (AU) of activity per gram of composition. Higher active levels may be desirable in highly concentrated detergent formulations.

Suitable examples of proteases are the subtilisins which are obtained from particular strains of *B. subtilis* and *B. licheniformis.* One suitable protease is obtained from a strain of *Bacillus,* having maximum activity throughout the pH range of 8-12, developed and sold as ESPERASE® by Novo Industries A/S of Denmark, hereinafter "Novo". The preparation of this enzyme and analogous enzymes is described in GB 1,243,784 to Novo. Other suitable proteases include ALCALASE® and SAVINASE® from Novo and MAXATASE® from International Bio-Synthetics, Inc., The Netherlands; as well as Protease A as disclosed in EP 130,756 A, January 9, 1985 and Protease B as disclosed in EP 303,761 A, April 28, 1987 and EP 130,756 A, January 9, 1985. See also a high pH protease from Bacillus sp. NCIMB 40338 described in WO 9318140 A to Novo. Enzymatic detergents comprising protease, one or more other enzymes, and a reversible protease inhibitor are described in WO 9203529 A to Novo. Other preferred proteases include those of WO 9510591 A to Procter & Gamble. When desired, a protease having decreased adsorption and increased hydrolysis is available as described in WO 9507791 to Procter & Gamble. A recombinant trypsin-like protease for detergents suitable herein is described in WO 9425583 to Novo.

Cellulases usable herein include both bacterial and fungal types, preferably having a pH optimum between 5 and 10. U.S. 4,435,307, Barbesgoard et al., March 6, 1984, discloses suitable fungal cellulases from *Humicola insolens or Humicola* strain DSM1800 or a cellulase 212-producing fungus belonging to the genus *Aeromonas,* and cellulase extracted from the hepatopancreas of a marine mollusk, *Dolabella Auricula Solander.* Suitable cellulases are also disclosed in GB-A-2.075.028; GB-A-2.095.275 and DE-OS-2.247.832. CAREZYME® and CELLUZYME® (Novo) are especially useful. See also WO 9117243 to Novo.

Suitable lipase enzymes for detergent usage include those produced by microorganisms of the *Pseudomonas* group, such as *Pseudomonas stutzeri* ATCC 19.154, as disclosed in GB 1,372,034. See also, the lipase in Japanese Patent Application 53,20487, laid open Feb. 24, 1978. This lipase is available from Amano Pharmaceutical Co. Ltd., Nagoya, Japan, under the trade name Lipase P "Amano," or "Amano-P." Other suitable commercial lipases include Amano-CES, lipases ex *Chromobacter viscosum*, e.g. *Chromobacter viscosum var. lipolyticum* NRRLB 3673 from Toyo Jozo Co., Tagata, Japan; *Chromobacter viscosum* lipases from U.S. Biochemical Corp., U.S.A. and Disoynth Co., The Netherlands, and lipases ex *Pseudomonas gladioli.* LIPOLASE® enzyme derived from *Humicola lanuginosa* and commercially available from Novo, see also EP 341,947, is a preferred lipase for use herein.

The enzyme-containing compositions herein may optionally also comprise from 0.001% to 10%, preferably from 0.005% to 8%, most preferably from 0.01% to 6%, by weight of an enzyme stabilizing system. The enzyme stabilizing system can be any stabilizing system which is compatible with the detersive enzyme. Such a system may be inherently provided by other formulation actives, or be added separately, e.g., by the formulator or by a manufacturer of detergent-ready enzymes. Such stabilizing systems can, for example, comprise calcium ion, boric acid, propylene glycol, short chain carboxylic acids, boronic acids, and mixtures thereof, and are designed to address different stabilization problems depending on the type and physical form of the detergent composition.

### E) Detergent Composition Preparation

The detergent compositions according to the present invention can be in liquid, paste or granular form. Such compositions can be prepared by combining the essential and optional components in the requisite concentrations in any suitable order and by any conventional means.

Granular compositions, for example, are generally made by combining base granule ingredients, e.g., surfactants, builders or water, as a slurry, and spray drying the resulting slurry to a low level of residual moisture (5-12%). The remaining dry ingredients, e.g., granules of the essential cellulosic based fabric treatment materials, can be admixed in granular powder form with the spray dried granules in a rotary mixing drum. The liquid ingredients, e.g., solutions of the essential cellulosic based fabric treatment materials, enzymes, binders and perfumes, can be sprayed onto the resulting granules to form the finished detergent composition. Granular compositions according to the present invention can also be in "compact form", i.e. they may have a relatively higher density than conventional granular detergents, i.e. from 550 to 950 g/l. In such case, the granular detergent compositions according to the present invention will contain a lower amount of "inorganic filler salt", compared to conventional granular detergents; typical filler salts are alkaline earth metal salts of sulphates and chlorides, typically sodium sulphate; "compact" detergents typically comprise not more than 10% filler salt.

Liquid detergent compositions can be prepared by admixing the essential and optional ingredients thereof in any desired order to provide compositions containing components in the requisite concentrations. Liquid compositions according to the present invention can also be in "compact form", in such case, the liquid detergent compositions according to the present invention will contain a lower amount of water, compared to conventional liquid detergents. Addition of the cellulosic based polymer or oligomer materials to liquid detergent or other aqueous compositions of this invention may be accomplished by simply mixing into the liquid solutions the desired cellulosic based fabric treatment materials.

### F) Fabric Laundering Method

The present invention also provides a method for laundering fabrics in a manner which imparts fabric appearance benefits provided by the cellulosic based polymer or oligomer materials used herein. Such a method employs contacting these fabrics with an aqueous washing solution formed from an effective amount of the detergent compositions hereinbefore described or formed from the individual components of such compositions. Contacting of fabrics with washing solution will generally occur under conditions of agitation although the compositions of the present invention may also be used to form aqueous unagitated soaking solutions for fabric cleaning and treatment. As discussed above, it is preferred that the washing solution have a pH of less than 10.0, preferably it has a pH of about 9.5 and most preferably it has a pH of about 7.5.

Agitation is preferably provided in a washing machine for good cleaning. Washing is preferably followed by drying the wet fabric in a conventional clothes dryer. An effective amount of a high density liquid or granular detergent composition in the aqueous wash solution in the washing machine is preferably from 500 to 7000 ppm, more preferably from 1000 to 3000 ppm.

### G) Fabric Conditioning

The cellulosic based polymer or oligomer materials hereinbefore described as components of the laundry detergent compositions herein may also be used to treat and condition fabrics and textiles in the absence of the surfactant and builder components of the detergent composition embodiments of this invention. Thus, for example, a fabric conditioning composition comprising only the cellulosic based fabric treatment materials themselves, or comprising an aqueous solution of the cellulosic based fabric treatment materials, may be added during the rinse cycle of a conventional home laundering operation in order to impart the desired fabric appearance and integrity benefits hereinbefore described.

### EXAMPLES

The following examples illustrate the compositions and methods of the present invention, but are not necessarily meant to limit or otherwise define the scope of the invention.

The first step in the production of the cellulosic based polymer or oligomer materials of the present invention is to convert the carboxymethylcellulose ("CMC") to a methyl ester. While there are numerous methods for accomplishing this step of the process known to those skilled in the art, two exemplary processes are given below as Examples I and II. Examples I and II differ both in the method of converting the CMC to a methyl ester as well as the feedstock of CMC as detailed below.

### EXAMPLE I

### Conversion of Purified CMC to Partial Methyl Ester

An 80g (0.257 mole equivalents) sample of carboxymethylcellulose (Aldrich, MW = 90,000, DS_{RC} = 0.7, and corresponding to the general formula defined above wherein x = 0) is suspended in a mixture of 196 g t-butanol, 15.7 g water, and 2.36g toluene (as an internal standard) in a 500 ml, 3-necked, round bottom flask equipped with mechanical stirrer, internal thermometer, condenser, and inert gas inlet. Then, 9.72g (0.077 mol) of dimethyl sulfate is added with stirring at room temperature. After about 2 hours, 50% sodium hydroxide is added as necessary to restore the pH to 7-8 as judged on an aliquot diluted with 5 volumes of water. Stirring is continued at room temperature for 40 hours. At this point a 1g sample of the liquor is withdrawn and 0.25g of pyridine is added. NMR spectroscopy of this sample in dimethyl sulfoxide reveals that little or no methylated pyridine has formed showing that the dimethyl sulfate has all reacted. The modified CMC is collected by filtration and washed on the filter with several volumes of t-butanol-water and then dried under vacuum at 100°C, The atr-infrared spectrum of this material shows carbonyl peaks for both ester and carboxylate groups consistent with the desired partial methyl ester.

The procedure is repeated except that the temperature is held at 25°C for 2 hours and then raised to 70°C for 2 hours before isolation.

### EXAMPLE II

### Conversion of Commercial Crude CMC to Partial Methyl Ester

An 80g (0.169 mole equiv.) sample of commercial CMC (Penn-Carbose, MW = 250,000, DS_{RC} = 0.59, 70% active) is suspended in a mixture of 197g t-butanol, 15g water, and 15g toluene (as an internal standard) in a 500 ml, 3-necked round bottom flask equipped with mechanical stirrer, internal thermometer, condenser, and inert gas inlet. Then, 14.98g (0.119 mol) of dimethyl sulfate is added with stirring at room temperature. After about 2 hours, 50% sodium hydroxide is added as necessary to restore the pH to 7-8 as judged on an aliquot diluted with 5 volumes of water. Stirring is continued at room temperature for 2 hours and then the temperature is raised to 70°C for 2 more hours. At this point a 1g sample of the liquor is withdrawn and 0.25g of pyridine is added. NMR spectroscopy of this sample in dimethyl sulfoxide reveals that little or no methylated pyridine has formed showing that the dimethyl sulfate has all reacted. The modified CMC is collected by filtration. One half of the collected solids is recombined with one half of the liquors and saved for later reaction. The other half of the collected solids is washed on the filter with several volumes of t-butanol-water and then dried under vacuum at 100°C. The atr-infrared spectrum of this material shows carbonyl peaks for both ester and carboxylate groups consistent with the desired partial methyl ester.

### EXAMPLE III

### Treatment of CMC Methyl Ester with Dimethylaminopropylamine

The following is one process for converting the CMC methyl esters, such as those produced in Examples I and II above, to a partial DMAPA Amide.

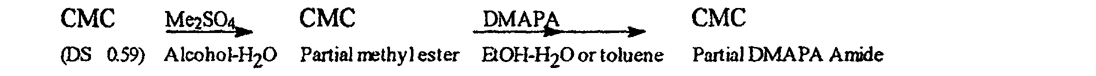

One half of the CMC methyl ester produced in either of Examples I or II above is resuspended in the t-butanol-water liquor in which it was made and is treated with 3-dimethylaminopropylamine ("DMAPA", 24.2g, 0.24 mol, Aldrich) by heating under reflux for 18 hours. The solids are collected on a filter and washed with ethanol. They are then suspended in ethanol containing 10% water and the pH is raised to 11.5. After stirring at room temperature for 30 minutes, the solids are collected on a filter and washed with more aqueous ethanol and then with ethanol. An aliquot of this material is hydrolyzed by heating in 3N H₂SO₄ in D₂O for 18 hours. An aliquot of the hydrolysate is adjusted to pH 12, centrifuged to clarify, and then examined by NMR spectroscopy. This shows a resonance for the dimethylamino groups of the DMAPA and the relative size of the peak indicates that at least 5% of the carboxylate groups have been converted to amides of DMAPA.

The treatment with DMAPA is repeated using the isolated methyl ester except that the suspending medium is toluene. The partial methyl ester is again partially converted to the DMAPA amide.

### EXAMPLE IV

### Partial Hydrolysis of Partial Methyl Ester of CMC

The following is another process for converting the CMC methyl esters, such as those produced in Example II above, to a partial DMAPA Amide.

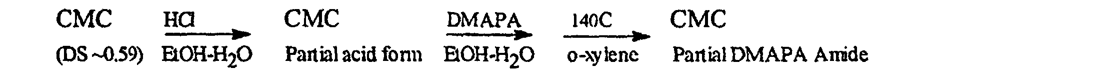

A commercial sample of CMC (Penn-Carbose, MW = 250,000, DS_{RC} = 0.59, 70% active) which is partially converted to methyl ester by the method of Example II (DS of ester = 0.18) is suspended in ethanol-water and heated with enough sodium hydroxide to hydrolyze 70% of the esters. The resulting partially hydrolyzed ester is collected on a filter and washed with ethanol and dried unde vacuum at 100°C. The atr-IR shows some residual ester carbonyl peak. The partially hydrolyzed ester displays partial solubility in water.

The hydrolysis is repeated, but the base used is an excess of 3-dimethylaminopropylamine. The isolated product shows a small amount of residual ester by atr-IR.

## Claims

1. A laundry detergent composition comprising:
a) from 1% to 80% by weight of detersive surfactants selected from the group consisting of nonionic, anionic, cationic, amphoteric, zwitterionic surfactants, or mixtures thereof; and
b) from 0.1% to 5.0% by weight of a mixture of cellulosic based polymers or oligomers, wherein an oligomer is a molecular having an average molecular weight below 1 000, of the general formula: 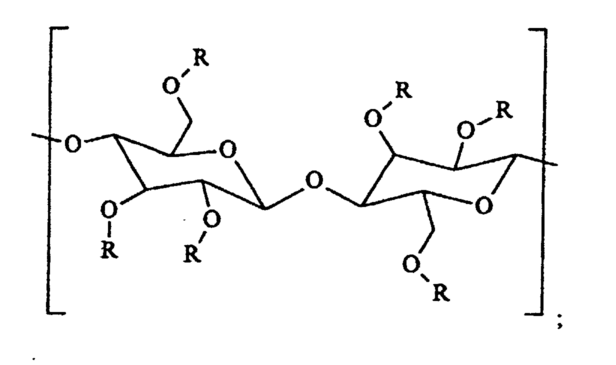
wherein each R is independently selected from the group consisting of 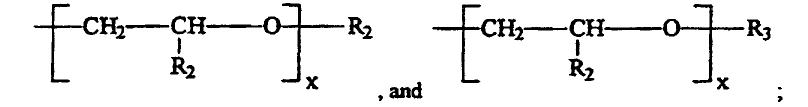 wherein:
- each R₂ is independently selected from the group consisting of H and C₁-C₄alkyl;
- each R₃ is independently selected from the group consisting of 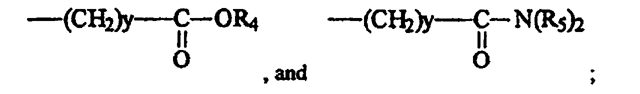
wherein:
- each R₄ is independently selected from the group consisting H, C₁-C₂₀alkyl, C₅-C₇ cycloalkyl, C₇-C₂₀ alkylaryl, C₇-C₂₀ arylalkyl, substituted alkyl, aminoalkyl, alkylaminoalkyl, dialkylaminoalkyl, piperidinoalkyl, morpholinoalkyl, cycloalkylaminoalkyl, hydroxyalkyl, Na, K, 1/2Ca, and 1/2Mg;
- each R₅ is independently selected from the group consisting H, C₁-C₂₀ alkyl, C₅-C₇ cycloalkyl, C₇-C₂₀ alkylaryl, C₇-C₂₀ arylalkyl, substituted alkyl, aminoalkyl, alkylaminoalkyl, dialkylaminoalkyl, piperidinoalkyl, morpholinoalkyl, cycloalkylaminoalkyl and hydroxyalkyl
wherein:
each x is from 0 to 5;
each y is from 1 to 5;
provided that:
if R₄ bears a positive charge, it is balanced by a suitable anion; and
the Degree of Substitution for group R₃ is between 0.2 and 2.0, more preferably between 0.3 and 1.0, and most preferably between 0.4 and 0.7; and
c) from 0.1% to 80% by weight of an organic or inorganic detergency builder; and
d) optionally, additional optional ingredients.

2. The detergent composition of claim 1, wherein at least 0.1 of the R₃ groups are derived from -CH₂-COOH or a salt thereof.

3. The detergent composition of claim 1, wherein the cellulosic based polymer or oligomer, wherein an oligomer is a molecular having an average molecular weight below 1 000, has an average molecular weight of from 10,000 to 2,000,000.

4. The detergent composition of claim 1, wherein the cellulosic based polymer or oligomer, wherein an oligomer is a molecular having an average molecular weight below 1 000, has an average molecular weight of from 50,000 to 1,000,000.

5. A laundry additive composition **characterized by**:
a) from 1% to 80% by weight of water, and
b) from 0.1% to 80.0% by weight of cellulosic based polymers or oligomers, wherein an oligomer is a molecular having an average molecular weight below 1 000, of the general formula: 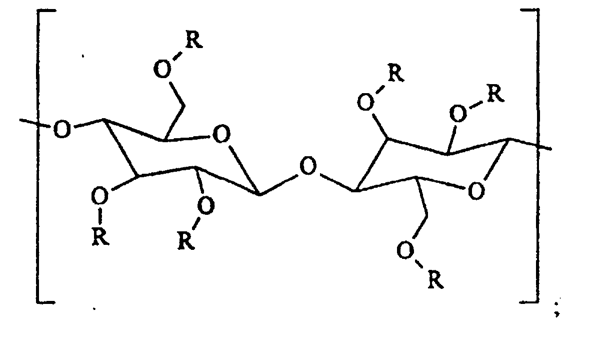
wherein each R is independently selected from the group consisting of 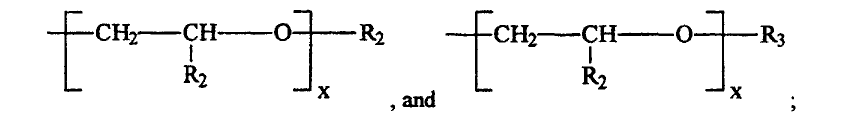 wherein:
- each R₂ is independently selected from the group consisting of H and C₁-C₄ alkyl;
- each R₃ is independently selected from the group consisting of 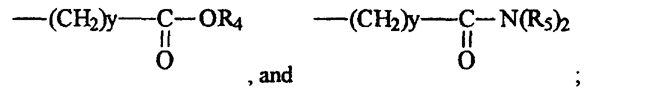
wherein:
- each R₄ is independently selected from the group consisting H, C₁ -C₂₀ alkyl, C₅-C₇ cycloalkyl, C₇-C₂₀ alkylaryl, C₇-C₂₀ arylalkyl, substituted alkyl, aminoalkyl, alkylaminoalkyl, dialkylaminoalkyl, piperidinoalkyl, morpholinoalkyl, cycloalkylaminoalkyl, hydroxyalkyl, Na, K, 1/2Ca, and 1/2Mg;
- each R₅ is independently selected from the group consisting H, C₁ -C₂₀ alkyl, C₅-C₇ cycloalkyl, C₇-C₂₀ alkylaryl, C₇-C₂₀ arylalkyl, substituted alkyl, aminoalkyl, alkylaminoalkyl, dialkylaminoalkyl, piperidinoalkyl, morpholinoalkyl, cycloalkylaminoalkyl and hydroxyalkyl
wherein:
each x is from 0 to 5;
each y is from 1 to 5;
provided that:
if R₄ bears a positive charge, it is balanced by a suitable anion; and
the Degree of Substitution for group R₃ is between 0.2 and 2.0, more preferably between 0.3 and 1.0, and most preferably between 0.4 and 0.7.

6. The laundry additive composition of claim 5, wherein the cellulosic based polymer or oligomer, wherein an oligomer is a molecular having an average molecular weight below 1 000, has an average molecular weight of from 10,000 to 2,000,000.

7. The laundry additive composition of claim 5, wherein the cellulosic based polymer or oligomer, wherein an oligomer is a molecular having an average molecular weight below 1 000, has an average molecular weight of from 50,000 to 1,000,000.

8. A cellulosic based polymer or oligomer material produced by converting a carboxylalkylated cellulosic at least partially to an ester, followed by treating the converted carboxylalkylated cellulosic material with an amine in the presence of at least traces of water, wherein the cellulosic based polymer or oligomer, wherein an oligomer is a molecular having an average molecular weight below 1 000, a material produced is of the general formula: 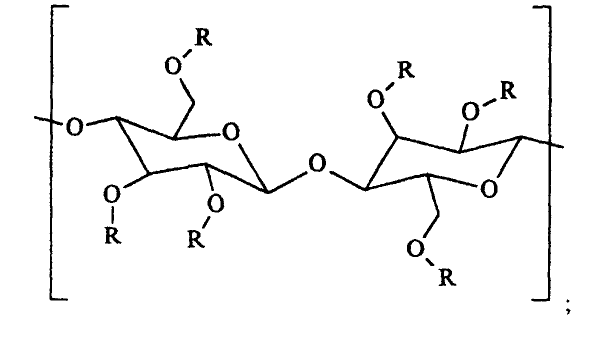 wherein each R is independently selected from the group consisting of 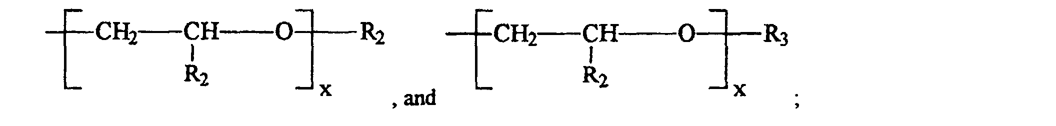 wherein:
- each R₂ is independently selected from the group consisting of H and C₁-C₄ alkyl;
- each R₃ is independently selected from the group consisting of 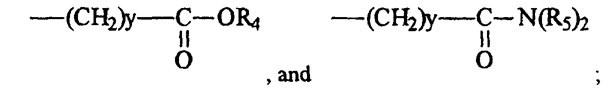
wherein:
- each R₄ is independently selected from the group consisting H, C₁-C₂₀ alkyl, C₅-C₇ cycloalkyl, C₇-C₂₀ alkylaryl, C₇-C₂₀ arylalkyl, substituted alkyl, aminoalkyl alkylaminoalkyl, dialkylaminoalkyl, piperidinoalkyl, morpholinoalkyl, cycloalkylaminoalkyl, hydroxyalkyl, Na, K, 1/2Ca, and 1/2Mg;
- each R₅ is independently selected from the group consisting H, C₁-C₂₀ alkyl, C₅-C₇ cycloalkyl, C₇-C₂₀ alkylaryl, C₇-C₂₀ arylalkyl, substituted alkyl, aminoalkyl, alkylaminoalkyl, dialkylaminoalkyl, piperidinoalkyl, morpholinoalkyl, cycloalkylaminoalkyl and hydroxyalkyl
wherein:
each x is from 0 to 5;
each y is from 1 to 5;
provided that:
if R₄ bears a positive charge, it is balanced by a suitable anion; and
the Degree of Substitution for group R₃ is between 0.2 and 2.0, more preferably between 0.3 and 1.0, and most preferably between 0.4 and 0.7.

9. The cellulosic based polymer or oligomer material of claim 8, wherein the cellulosic based polymer or oligomer, wherein an oligomer is a molecular having an average molecular weight below 1 000, has an average molecular weight of from 10,000 to 2,000,000.

10. The cellulosic based polymer or oligomer material of claim 8, wherein the cellulosic based polymer or oligomer, wherein an oligomer is a molecular having an average molecular weight below 1 000, has an average molecular weight of from 50,000 to 1,000,000.

## Patentansprüche

1. Wäschewaschmittelzusammensetzung umfassend:
a) 1 bis 80 Gew.-% Waschtenside, ausgewählt aus der Gruppe umfassend nichtionische, anionische, kationische, amphotere, zwitterionische Tenside, oder Mischungen davon; und
b) 0,1 bis 5,0 Gew.-% einer Mischung aus auf Cellulose basierenden Polymeren oder Oligomeren, wobei ein Oligomer ein Molekül ist, welches ein durchschnittliches Molekulargewicht von weniger als 1000 besitzt, der allgemeinen Formel: 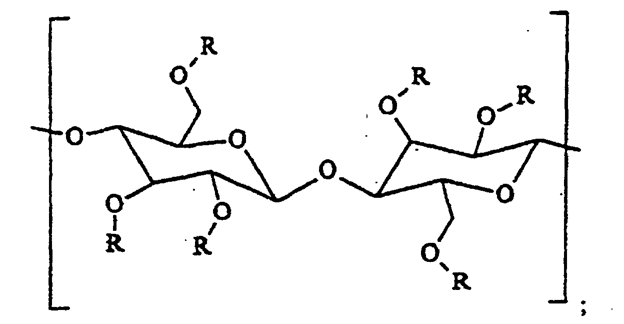 wobei jedes R unabhängig ausgewählt ist, aus der Gruppe umfassend 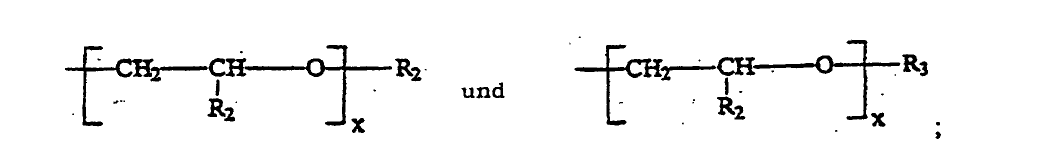 wobei:
- jedes R₂ unabhängig ausgewählt ist aus der Gruppe umfassend H und C₁-C₄-Alkyl;
- Jedes R₃ unabhängig ausgewählt ist aus der Gruppe umfassend 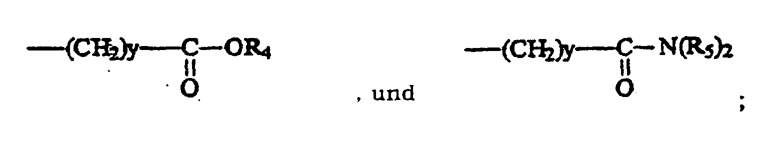
wobei:
- jedes R₄ unabhängig ausgewählt ist aus der Gruppe umfassend H, C₁-C₂₀-Alkyl, C₅-C₇-Cycloalkyl, C₇-C₂₀-Alkylaryl, C₇-C₂₀-Arylalkyl, substituiertes Alkyl, Aminoalkyl, Alkylaminoalkyl, Dialkylaminoalkyl, Piperidinoalkyl, Morpholinoalkyl, Cycloalkylaminoalkyl, Hydroxyalkyl, Na, K, 1/2 Ca, und 1/2 Mg;
- jedes R₅ unabhängig ausgewählt ist aus der Gruppe umfassend H, C₁-C₂₀-Alkyl, C₅-C₇-Cycloalkyl, C₇-C₂₀-Alkylaryl, C₇-C₂₀-Arylalkyl, substituiertes Alkyl, Aminoalkyl, Alkylaminoalkyl, Dialkylaminoalkyl, Piperidinoalkyl, Morpholinoalkyl, Cycloalkylamlnoalkyl und Hydroxyalkyl,
wobei :
jedes x 0 bis 5 ist;
jedes y 1 bis 5 ist;
vorausgesetzt, dass:
falls R₄ eine positive Ladung trägt, diese durch ein geeignetes Anion ausgeglichen wird; und
der Grad der Substitution von Gruppe R₃ zwischen 0,2 und 2,0 liegt, noch bevorzugter zwischen 0,3 und 1,0, und am meisten bevorzugt zwischen 0,4 und 0,7; und
c) 0,1 bis 80 Gew.-% eines organischen oder anorganischen Waschwirkungsbuilders; und
d) wahlweise, zusätzliche Wahlbestandteile.

2. Waschmittelzusammensetzung nach Anspruch 1, worin mindestens 0,1 der R₃-Gruppen von -CH₂-COOH oder einem Salz hiervon abgeleitet sind.

3. Waschmittelzusammensetzung nach Anspruch 1, worin das auf Cellulose basierende Polymer oder Oligomer, wobei ein Oligomer ein Molekül ist, welches ein durchschnittliches Molekulargewicht von unter 1.000 besitzt, ein durchschnittliches Molekulargewicht von 10.000 bis 2.000.000 aufweist.

4. Waschmittelzusammensetzung nach Anspruch 1, worin das auf Cellulose basierende Polymer oder Oligomer, wobei ein Oligomer ein Molekül ist, welches ein durchschnittliches Molekulargewicht von unter 1.000 besitzt, ein durchschnittliches Molekulargewicht von 5.000 bis 1.000.000 aufweist.

5. Waschzusatz-Zusammensetzung charakterisiert durch:
a) 1 bis 80 Gew.-% Wasser; und
b) 0,1 bis 80 Gew.-% Polymeren oder Oligomeren, basierend auf Cellulose, wobei ein Oligomer ein Molekül ist, welches ein durchschnittliches Molekulargewicht von unter 1.000 besitzt, der allgemeinen Formel: 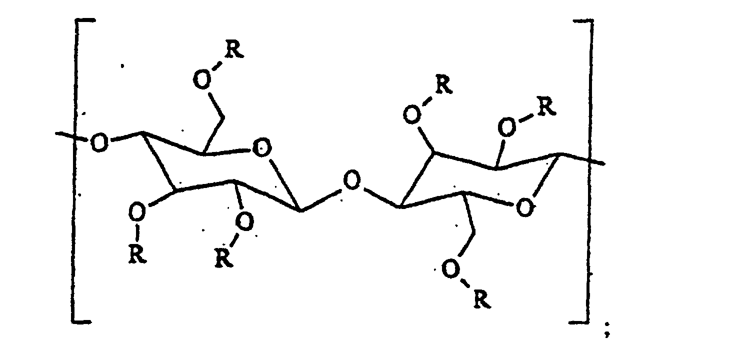
wobei jedes R unabhängig ausgewählt ist aus der Gruppe umfassend 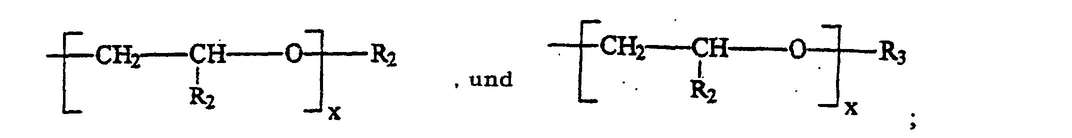 wobei:
- jedes R₂ unabhängig ausgewählt ist aus der Gruppe umfassend H, und C₁-C₄-Alkyl;
- jedes R₃ unabhängig ausgewählt ist aus der Gruppe umfassend 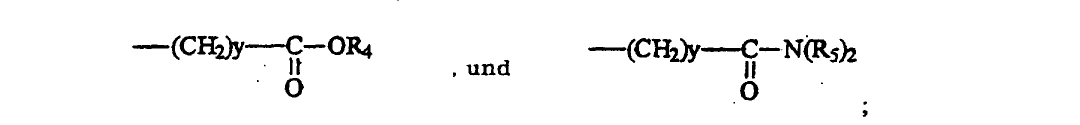
wobei:
- jedes R₄ unabhängig ausgewählt ist aus der Gruppe umfassend H, C₁-C₂₀-Alkyl, C₅-C₇-Cycloalkyl, C₇-C₂₀-Alkylaryl, C₇-C₂₀-Arylalkyl, substituiertes Alkyl, Aminoalkyl, Alkylaminoalkyl, Dialkylaminoalkyl, Piperidlnoalkyl. Morpholinoalkyl, Cycloalkylaminoalkyl, Hydroxyalkyl, Na, K, 1/2 Ca, und 1/2 Mg;
- jedes R₅ unabhängig ausgewählt ist aus der Gruppe umfassend H, C₁-C₂₀-Alkyl, C₅-C₇-Cycloalkyl, C₇-C₂₀-Alkylaryl, C₇-C₂₀-Arylalkyl, substituiertes Alkyl, Aminoalkyl, Alkylaminoalkyl, Dialkylaminoalkyl, Piperidinoalkyl, Morpholinoalkyl, Cycloalkylaminoalkyl und Hydroxyalkyl,
wobei:
jedes x 0 bis 5 ist;
jedes y 1 bis 5 ist;
vorausgesetzt, dass:
falls R₄ eine positive Ladung trägt, diese durch ein geeignetes Anion ausgeglichen wird; und
der Grad der Substitution von Gruppe R₃ zwischen 0,2 und 2,0 liegt, noch bevorzugter zwischen 0,3 und 1,0, und am meisten bevorzugt zwischen 0,4 und 0,7.

6. Waschzusatz-Zusammensetzung nach Anspruch 5, worin das auf Cellulose basierende Polymer oder Oligomer, wobei ein Oligomer ein Molekül ist, welches ein durchschnittliches Molekulargewicht von unter 1.000 besitzt, ein durchschnittliches Molekulargewicht von 10.000 bis 2.000.000 besitzt.

7. Waschzusatz-Zusammensetzung nach Anspruch 5, worin das auf Cellulose basierende Polymer oder Oligomer, wobei ein Oligomer ein Molekül ist, welches ein durchschnittliches Molekulargewicht von unter 1.000 besitzt, ein durchschnittliches Molekulargewicht von 50.000 bis 1.000.000 besitzt.

8. Auf Cellulose basierendes Polymer oder Oligomermaterial, hergestellt durch zumindest teilweise Umwandlung einer carboxyalkylierten Cellulose in einen Ester, gefolgt durch Behandlung des umgewandelten carboxyalkylierten Cellulosematerials mit einem Amin in Gegenwart von mindestens Spuren an Wasser, wodurch das auf Cellulose basierende, hergestellte Polymer oder Oligomer, wobei ein Oligomer ein Molekül ist, welches ein durchschnittliches Molekulargewicht von unter 1.000 besitzt, die allgemeine Formel besitzt: 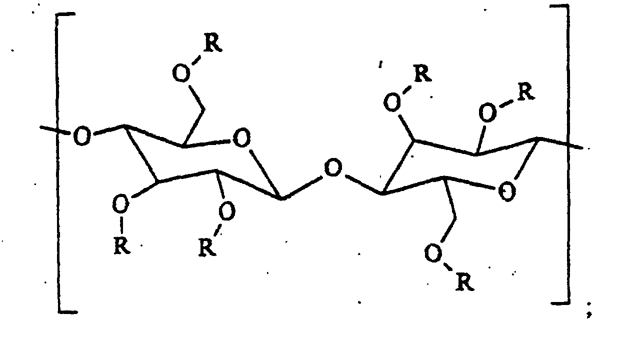 wobei jedes R unabhängig ausgewählt ist aus der Gruppe umfassend 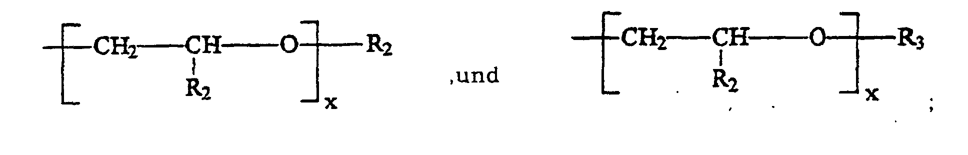 wobei:
- jedes R₂ unabhängig ausgewählt ist aus der Gruppe umfassend H und C₁-C₄-Alkyl;
- jedes R₃ unabhängig ausgewählt ist aus der Gruppe umfassend 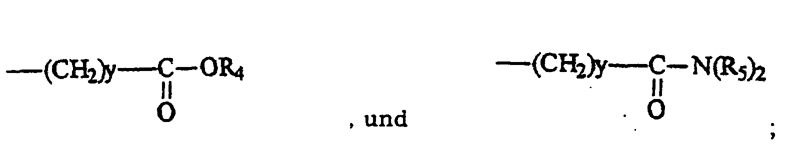
wobei:
- jedes R₄ unabhängig ausgewählt ist aus der Gruppe umfassend H, C₁-C₂₀-Alkyl, C₅-C₇-Cycloalkyl, C₇-C₂₀-Alkylaryl, C₇-C₂₀-Arylalkyl, substituiertes Alkyl, Aminoalkyl, Alkylaminoalkyl, Dialkylaminoalkyl, Piperidinoalkyl, Morpholinoalkyl, Cycloalkylaminoalkyl, Hydroxyalkyl, Na, K, 1/2 Ca, und 1/2 Mg;
- jedes R₅ unabhängig ausgewählt ist aus der Gruppe umfassend H, C₁-C₂₀-Alkyl, C₅-C₇-Cycloalkyl, C₇-C₂₀-Alkylaryl, C₇-C₂₀-Arylalkyl, substituiertes Alkyl, Aminoalkyl, Alkylaminoalkyl, Dialkylaminoalkyl, Piperidinoalkyl, Morpholinoalkyl, Cycloalkylaminoalkyl und Hydroxyalkyl,
wobei:
jedes x 0 bis 5 ist;
jedes y 1 bis 5 ist;
vorausgesetzt, dass:
falls R₄ eine positive Ladung trägt, diese durch ein geeignetes Anion ausgeglichen wird; und
der Grad der Substitution von Gruppe R₃ zwischen 0,2 und 2,0 liegt, noch bevorzugter zwischen 0,3 und 1,0, und am meisten bevorzugt zwischen 0,4 und 0,7.

9. Auf Cellulose basierendes Polymer- oder Oligomermaterial nach Anspruch 8, worin das auf Cellulose basierende Polymer oder Oligomer, wobei ein Oligomer ein Molekül ist mit einem durchschnittlichen Molekulargewicht von unter 1.000, ein durchschnittliches Molekulargewicht von 10.000 bis 2.000.000 besitzt.

10. Auf Cellulose basierendes Polymer- oder Oligomermaterial nach Anspruch 8, worin das auf Cellulose basierende Polymer oder Oligomer, wobei ein Oligomer ein Molekül ist mit einem durchschnittlichen Molekulargewicht von unter 1.000, ein durchschnittliches Molekulargewicht von 50.000 bis 1.000.000 besitzt.

## Revendications

1. Composition détergente de lavage comprenant :
a) 1% à 80% en poids d'agents tensioactifs détersifs choisis dans le groupe constitué des agents tensioactifs non ioniques, anioniques, cationiques, amphotères, zwittérioniques ou de leurs mélanges; et
b) 0,1% à 5,0% en poids d'un mélange de polymères ou oligomères à base cellulosique de formule générale : 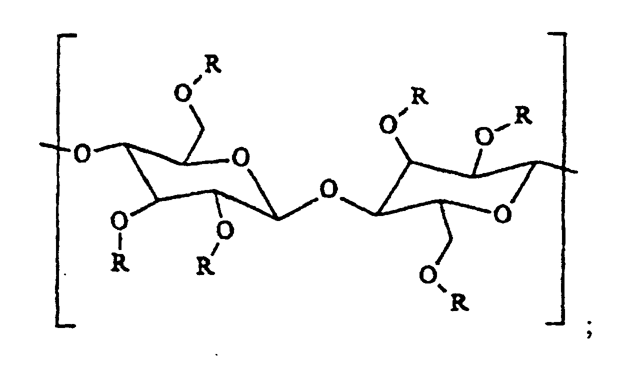 dans laquelle chaque R est choisi indépendamment dans le groupe constitué des groupes suivants : 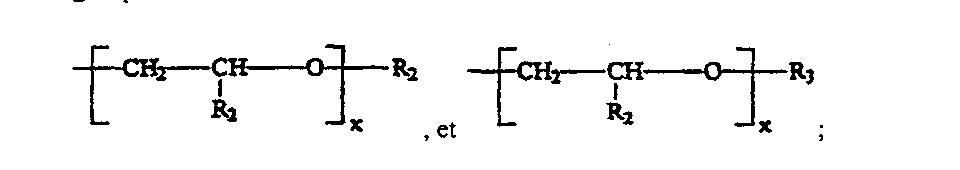 dans lesquels :
- chaque R₂ est choisi indépendamment dans le groupe constitué de H et d'un groupe alkyle en C₁-C₄,
- chaque R₃ est choisi indépendamment dans le groupe constitué des groupes suivants : 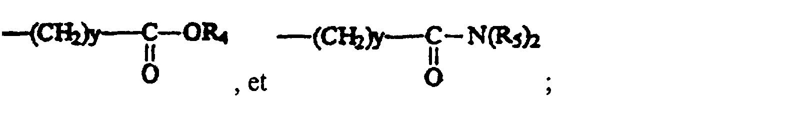
dans lesquels :
- chaque R₄ est choisi indépendamment dans le groupe constitué de H ou d'un groupe alkyle en C₁-C₂₀, cycloalkyle en C₅-C₇, alkylaryle en C₇-C₂₀, arylalkyle en C₇-C₂₀, alkyle substitué, aminoalkyle, alkylaminoalkyle, dialkylaminoalkyle, pipéridinoalkyle, morpholinoalkyle, cycloalkylaminoalkyle, hydroxyalkyle, Na, K, ½ Ca et ½ Mg,
- chaque R₅ est choisi indépendamment dans le groupe constitué de H ou d'un groupe alkyle en C₁-C₂₀, cycloalkyle en C₅-C₇, alkylaryle en C₇-C₂₀, arylalkyle en C₇-C₂₀, alkyle substitué, aminoalkyle, alkylaminoalkyle, dialkylaminoalkyle, pipéridinoalkyle, morpholinoalkyle, cycloalkylaminoalkyle et hydroxyalkyle,
dans lesquels :
- chaque x est 0 à 5,
- chaque y est 1 à 5,
à condition que :
si R₄ porte une charge positive, elle soit équilibrée par un anion approprié; et
que le degré de substitution pour le groupe R₃ se situe entre 0,2 et 2,0, mieux encore entre 0,3 et 1,0, bien mieux encore entre 0,4 et 0,7; et
c) 0,1% à 80% en poids d'un adjuvant de détergence organique ou inorganique; et
d) facultativement, des ingrédients facultatifs supplémentaires.

2. Composition détergente selon la revendication 1, dans laquelle au moins 0,1 des groupes R₃ sont dérivés de -CH₂-COOH ou d'un de ses sels.

3. Composition détergente selon la revendication 1, dans laquelle le polymère ou l'oligomère à base cellulosique, où un oligomère est une molécule ayant un poids moléculaire moyen inférieur à 1000, a un poids moléculaire moyen de 10 000 à 2 000 000.

4. Composition détergente selon la revendication 1, dans laquelle le polymère ou l'oligomère à base cellulosique, où un oligomère est une molécule ayant un poids moléculaire moyen inférieur à 1000, a un poids moléculaire moyen de 50 000 à 1 000 000.

5. Composition d'additif de lavage **caractérisée par** :
a) 1% à 80% en poids d'eau et
b) 0,1% à 80% en poids de polymères ou d'oligomères à base cellulosique, où un oligomère est une molécule ayant un poids moléculaire moyen inférieur à 1000, de formule générale : 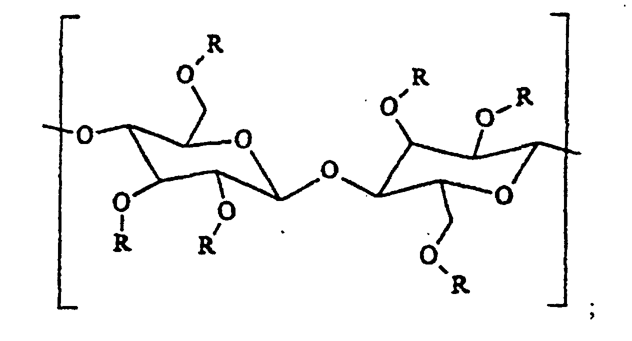
dans laquelle chaque R est choisi indépendamment dans le groupe constitué des groupes suivants : 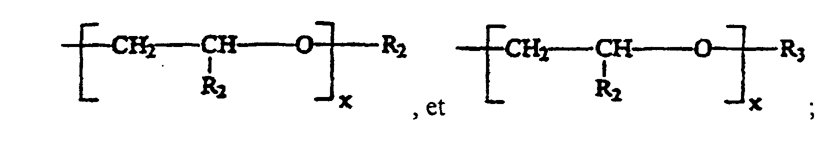 dans lesquels :
- chaque R₂ est choisi indépendamment dans le groupe constitué de H et d'un groupe alkyle en C₁-C₄;
- chaque R₃ est choisi indépendamment dans le groupe constitué des groupes suivants : 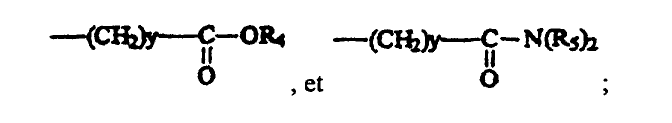
dans lesquels :
- chaque R₄ est choisi indépendamment dans le groupe constitué de H ou d'un groupe alkyle en C₁-C₂₀, cycloalkyle en C₅-C₇, alkylaryle en C₇-C₂₀, arylalkyle en C₇-C₂₀, alkyle substitué, aminoalkyle, alkylaminoalkyle, dialkylaminoalkyle, pipéridinoalkyle, morpholinoalkyle, cycloalkylaminoalkyle, hydroxyalkyle, Na, K, ½ Ca et ½ Mg;
- chaque R₅ est choisi indépendamment dans le groupe constitué de H ou d'un groupe alkyle en C₁-C₂₀, cycloalkyle en C₅-C₇, alkylaryle en C₇-C₂₀, arylalkyle en C₇-C₂₀, alkyle substitué, aminoalkyle, alkylaminoalkyle, dialkylaminoalkyle, pipéridinoalkyle, morpholinoalkyle, cycloalkylaminoalkyle et hydroxyalkyle,
dans lesquels :
- chaque x est 0 à 5,
- chaque y est 1 à 5,
à condition que :
si R₄ porte une charge positive, elle soit équilibrée par un anion approprié; et
que le degré de substitution pour le groupe R₃ se situe entre 0,2 et 2,0, mieux encore entre 0,3 et 1,0, bien mieux encore entre 0,4 et 0,7.

6. Composition d'additif de lavage selon la revendication 5, dans laquelle le polymère ou l'oligomère à base cellulosique, où un oligomère est une molécule ayant un poids moléculaire moyen inférieur à 1000, a un poids moléculaire moyen de 10 000 à 2 000 000.

7. Composition d'additif de lavage selon la revendication 5, dans laquelle le polymère ou l'oligomère à base cellulosique, où un oligomère est une molécule ayant un poids moléculaire moyen inférieur à 1000, a un poids moléculaire moyen de 50 000 à 1 000 000.

8. Matériau polymère ou oligomère à base cellulosique produit en convertissant un matériau cellulosique carboxylalkylé au moins partiellement en un ester, suivi du traitement du matériau cellulosique carboxylalkylé converti avec une amine en présence au moins de traces d'eau, dans lequel le matériau polymère ou oligomère à base cellulosique, où un oligomère est une molécule ayant un poids moléculaire moyen inférieur à 1000, a pour formule générale : 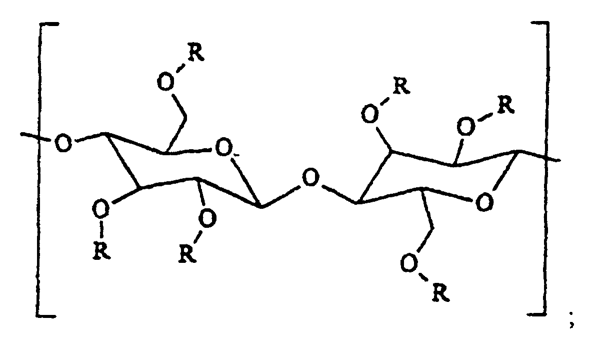 dans laquelle R est choisi indépendamment dans le groupe constitué des groupes suivants : 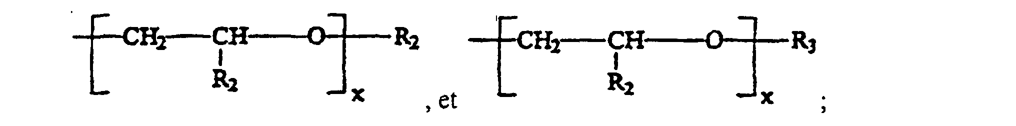 dans lesquels :
- chaque R₂ est choisi indépendamment dans le groupe constitué de H et d'un groupe alkyle en C₁-C₄;
- chaque R₃ est choisi indépendamment dans le groupe constitué des groupes suivants : 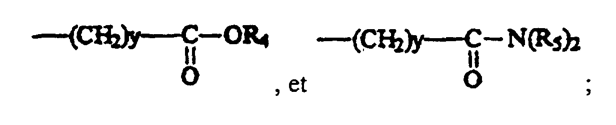
dans lesquels :
- chaque R₄ est choisi indépendamment dans le groupe constitué de H ou d'un groupe alkyle en C₁-C₂₀, cycloalkyle en C₅-C₇, alkylaryle en C₇-C₂₀, arylalkyle en C₇-C₂₀, alkyle substitué, aminoalkyle, alkylaminoalkyle, dialkylaminoalkyle, pipéridinoalkyle, morpholinoalkyle, cycloalkylaminoalkyle, hydroxyalkyle, Na, K, ½ Ca et ½ Mg;
- chaque R₅ est choisi indépendamment dans le groupe constitué de H ou d'un groupe alkyle en C₁-C₂₀, cycloalkyle en C₅-C₇, alkylaryle en C₇-C₂₀, arylalkyle en C₇-C₂₀, alkyle substitué, aminoalkyle, alkylaminoalkyle, dialkylaminoalkyle, pipéridinoalkyle, morpholinoalkyle, cycloalkylaminoalkyle et hydroxyalkyle;
dans lesquels :
- chaque x est 0 à 5;
- chaque y est 1 à 5;
à condition que :
si R₄ porte une charge positive, elle soit équilibrée par un anion approprié; et
que le degré de substitution pour le groupe R₃ se situe entre 0,2 et 2,0, mieux encore entre 0,3 et 1,0, bien mieux encore entre 0,4 et 0,7.

9. Matériau polymère ou oligomère à base cellulosique selon la revendication 8, dans lequel le polymère ou l'oligomère à base cellulosique, où un oligomère est une molécule ayant un poids moléculaire moyen inférieur à 1000, a un poids moléculaire moyen de 10 000 à 2 000 000.

10. Matériau polymère ou oligomère à base cellulosique selon la revendication 8, dans lequel le polymère ou l'oligomère à base cellulosique, où un oligomère est une molécule ayant un poids moléculaire moyen inférieur à 1000, a un poids moléculaire moyen de 50 000 à 1 000 000.
